# EUROPÄISCHE PATENTANMELDUNG

(11) **EP 1 333 060 A1**
(43) Veröffentlichungstag der Anmeldung: **06.08.2003**
(21) Anmeldenummer: 03001216.5
(22) Anmeldetag: 20.01.2003
(51) Int. Cl.: C08L 77/00, C08L 77/02, C08L 77/06, C08K 7/14

(54) **Schlagzäh-modifizierte Polyamidformmassen mit erhöhter Schmelzeviskosität und verbesserter Oberflächenqualität**

(30) Priorität: 31.01.2002 DE 10203971
(71) Anmelder: Bayer Aktiengesellschaft, 51368 Leverkusen (DE)
(72) Erfinder: Joachimi, Detlev, Dr., 47800 Krefeld (DE); Persigehl, Peter, Dr., 40217 Düsseldorf (DE); Schulte, Helmut, 47803 Krefeld (DE)

(57) **Zusammenfassung**

Die Erfindung betrifft thermoplastische Formmassen, hergestellt aus einer Mischung enthaltend Polyamid, Füllstoffe und Verstärkungsstoffe, di- oder mehrfunktionelle verzweigend und/oder polymerkettenverlängernd wirkende Additive, Schlagzähmodifikator sowie sonstige nicht verzweigend und nicht polymerkettenverlängernde Additive.

## Beschreibung

Die Erfindung betrifft thermoplastische Formmassen, hergestellt aus einer Mischung enthaltend Polyamid, Füllstoffe und Verstärkungsstoffe, di- oder mehrfunktionelle verzweigend und/oder polymerkettenverlängernd wirkende Additive, Schlagzähmodifikator sowie sonstige nicht verzweigend und nicht polymerkettenverlängernde Additive.

Polyamid-Formmassen sind hochwertige Thermoplaste, die sich durch hohe Wärmeformbeständigkeit, sehr gute mechanische Eigenschaften, hohe Zähigkeiten, gute Resistenz gegenüber Chemikalien und leichte Verarbeitbarkeit auszeichnen. Die Eigenschaften der Polyamide lassen sich durch Verstärkung mit Glasfasern, Glaskugeln, mineralischen Füllstoffen und Mischungen aus diesen merklich erweitern. Eine Elastomermodifizierung verbessert die Schlagzähigkeit von Polyamiden. Durch die Vielzahl der Kombinationsmöglichkeiten werden immer neue maßgeschneiderte Produkte für spezielle Einsatzgebiete entwickelt.

Die Anwendungspalette der Polyamide umfasst Fasern, Folien, Schmelzkleber und Formteile für die Elektro-, Bau-, Möbel- und Automobilindustrie. Verstärkte Polyamide zählen zu den hochwertigen Engineering-Produkten, die in verschiedenen Bereichen Metallanwendungen ersetzt haben.

Als teilkristalline Polymere mit sehr hohem Anteil an Wasserstoffbrücken haben die Polyamide sehr niedrige Schmelzviskositäten. Polyamide mit einer rel. Viskosität von 3 (gemessen in 1 %iger Metakresollösung bei 25°C) haben sich für die Herstellung von Formteilen in Spritzgießverfahren sehr bewährt. Für die Herstellung von Folien, Profilen, Rohren im Extrusionsverfahren und Halbzeugen für das Thermoformen werden Polyamide mit erhöhten Viskositäten verwendet. Je nach Einsatzgebiet reichen relative Viskositäten von 4 bis 6 aus (gemessen in 1%iger Metakresollösung bei 25°C), um Extrudate mit ausreichenden Schmelzestandfestigkeiten zu erhalten.

Eine Möglichkeit zur Erhöhung der Viskosität wird in EP-A 0 685 528 beschrieben. Ausgehend von thermoplastischen Polyamiden wird die Viskosität durch Zugabe eines Diepoxids erhöht. Die resultierenden Polyamide sind wie in DE-A 19 948 850 beschrieben insbesondere auch zur Herstellung von thermoplastischen, thermoformbaren Halbzeugen geeignet. Die beschriebenen Materialien sind aber für die Nachbearbeitung ("Besäumen") im verarbeitungsfrischen Zustand (z.B. durch Sägen) wegen zu großer Sprödigkeit nicht geeignet. Neben dem Nachteil der Sprödigkeit im nicht konditionierten Zustand, die zum Splittern bei der Nachbearbeitung führen kann, erhält man mit den beschriebenen Materialien auch nur Platten bzw. Formteile mit relativ schlechter Oberflächenqualität, die für Anwendungen mit hohen Anforderungen an die optische Qualität der Bauteile (möglichst geringe Rauhigkeit) nicht geeignet sind.

Es bestand die Aufgabe, ein Polyamid zur Herstellung von Folien, Profilen, Rohren im Extrusionsverfahren und thermoplastischen Halbzeugen für das Thermoformen bereitzustellen, das sich durch eine verbesserte Bearbeitbarkeit nach dem Extrusionsprozess sowie eine verbesserte Oberflächenqualität auszeichnet.

Überraschend wurde gefunden, dass durch Zugabe von kautschukelastischen Polymerisaten zu hochviskosen, glasfaserverstärkten Polyamidformmassen nicht nur die Sprödigkeit der aus den erfindungsgemäßen Polyamidformmassen gefertigten Formteile reduziert werden kann, sondern auch eine weniger rauhe Oberfläche erzeugt wird.

Gegenstand der Erfindung ist eine Mischung enthaltend

| | | |
|---|---|---|
| A) | 79 bis 47 Gew.-% | eines thermoplastischen teilkristallinen Polyamids, |
| | | |
| B) | 0 bis 50 Gew.-% | Verstärkungsstoffen, |
| | | |
| C) | 0,1 bis 4 Gew.-% | eines verzweigend und/oder polymerkettend verlängernd |
| | | wirkenden Additivs, bevorzugt eines Diepoxids, |
| | | |
| D) | 0,1 bis 30 Gew.-% | eines kautschukelastischen Polymerisats |
| | | |
| E) | 0,1 bis 2 Gew.-% | Verarbeitungsadditiven, Stabilisatoren und/oder anderer |
| | | üblicher Zusatzstoffe. |

Diese Polyamidformmassen erreichen nicht nur die gewünschte Viskosität während der Compoundierung, sondern lassen sich durch ihr breites Verarbeitungsfenster und die Thermostabilität der Schmelze sowohl nach dem Spritzgieß-, dem Gasinjektions- als auch nach dem Extrusions- und Extrusionsblasverfahren sehr gut verarbeiten. Aus den Polyamidformmassen lassen sich sehr gut thermoplastische Halbzeuge produzieren, die sehr gut thermoverformt werden können. Die erhaltenen Bauteile können unmittelbar nach der Herstellung über Extrusions-, Extrusionsblas- oder Thermoformverfahren mechanisch bearbeitet werden, ohne dass Sprödbrüche eintreten. Die Oberflächestruktur ist sehr gleichmäßig.

Als thermoplastisches Polyamid A) der erfindungsgemäßen Formmassen eignen sich teilkristalline Polyamide (PA), bevorzugte Polyamide sind PA 6, PA 66, PA 46, PA 610, PA 6/6T oder teilkristalline Copolyamide bzw. Mischungen auf Basis dieser Komponenten. Besonders bevorzugt sind PA 6, PA 66 und Copolyamide von PA 6 und PA 66.

Als thermoplastisches Polyamid A) der erfindungsgemäßen Formmasen eignen sich teilkristalline Polyamide, die ausgehend von Diaminen und Dicarbonsäuren und/oder Lactamen mit wenigstens 5 Ringgliedern oder entsprechenden Aminosäuren hergestellt werden können.

Als Ausgangsprodukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexyl-propane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen.

Besonders bevorzugt werden Caprolactame, ganz besonders bevorzugt ε-Caprolactam eingesetzt.

Als Verstärkungsstoffe B) für die erfindungsgemäßen Formmassen werden handelsübliche Glasfasern, Kohlefasern, Mineralfasern, Füllstoffe mit Oberflächenbehandlung usw. für Polyamide, einzeln oder in Mischungen verwendet.

Als faser- oder teilchenförmige Füllstoffe seien Kohlenstofffasern, Glasfasern, Glaskugeln, Glasflakes, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen bis zu 50 Gew.-%, insbesondere bis zu 40 % eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings, Schnittglas oder gemahlene Glasfasern in den handelsüblichen Formen eingesetzt werden.

Die faserförmigen Füllstoffe können zur besseren Verträglichkeit mit dem Thermoplasten mit einer Silanverbindung oder anderen Oberflächenmodifikatoren vorbehandelt sein.

Geeignete Silanverbindungen sind z.B. solche der allgemeinen Formel (III)

(X-(CH₂)ₙ)ₖ-Si-(O-CₘH₂ₘ₊₁)₂₋ₖ (III)

in der die Substituenten folgende Bedeutung haben: 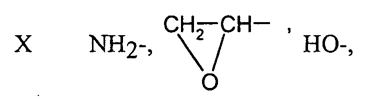
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1.

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,05 bis 5, vorzugsweise 0,1 bis 1,5 und insbesondere 0,25 bis 1 Gew.-% (bezogen auf B) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8:1 bis 35:1, bevorzugt von 8:1 bis 20:1, auf. Der mineralische Füllstoff kann gegebenenfalls mit den vorstehend genannten Silanverbindungen vorbehandelt sein; die Vorbehandlung ist jedoch nicht unbedingt erforderlich. Prinzipiell können aber auch Wollastonite mit geringerem Aspektverhältnis eingesetzt werden.

Als weitere Füllstoffe seien Kaolin, calciniertes Kaolin, Talkum und Kreide genannt.

Als Verzweiger bzw. Kettenverlängerer C) kommen niedermolekulare und oligomere Verbindungen in Frage, die über mindestens zwei reaktive Gruppen verfügen, die mit primären und/oder sekundären Aminogruppen, und/oder Amidgruppen und/oder Carbonsäuregruppen reagieren können. Reaktive Gruppen können z.B. Isocyanate, ggf. blockiert, Epoxide, Maleinsäureanhydrid, Oxazoline, Oxazine, Oxazolone, u.ä. sein. Bevorzugt sind Diepoxide auf Basis Diglycidylether (Bisphenol und Epichlorhydrin), auf Basis Aminepoxidharz (Anilin und Epichlorhydrin), auf Basis Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan. Besonders bevorzugt sind Glycidylether, ganz besonders bevorzugt BisphenolA-Diglycidylether.

Zur Verzweigung/Kettenverlängerung sind geeignet:
1. Polyglydicyl- oder Poly-(β-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschließender Alkalibehandlung.
   Ether dieses Typs leiten sich beispielsweise ab von acyclischen Alkoholen, wie Ethylenglykol, Diethylenglykol und höhereren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylpropan, Bistrimethylolpropan, Pentaerythrit, Sorbit, sowie von Polyepichlorhydrinen.
   Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethyl-amino)-diphenylmethan.
   Die Epoxidverbindungen können sich auch von einkernigen Phenolen ableiten, wie beispielsweise von Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltenen Kondensationsprodukten von Phenolen mit Formaldehyd wie Phenol-Novolake.
2. Poly-(N-glycidyl)-Verbindungen erhältlich durch Dehydrochlorierung der Reaktionsprodukte von Epichlorhydrin mit Aminen, die mindestens zwei Aminowasserstoffatome enthalten. Bei diesen Aminen handelt es sich zum Beispiel um Anilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenyl oder N,N,O-Triglycidyl-p-aminophenol.
   Zu den Poly-(N-glycidyl)-Verbindungen zählen aber auch N,N'-Diglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin.
3. Poly-(S-glycidyl)-Verbindungen wie beispielsweise Di-S-glycidylderivate, die sich von Dithiolen, wie beispielsweise Ethan-1,2-dithiol oder Bis-(4-mercaptomethylphenyl)-ether ableiten.

Als Komponente D) können die erfindungsgemäßen Formmassen 0,1 bis 30 Gew.-%, bevorzugt 1 bis 25 Gew.-%, besonders bevorzugt 5,1 bis 20 Gew.-% kautschukelastische Polymerisate (oft auch als Schlagzähmodifier, Elastomere oder Kautschuke bezeichnet) enthalten.

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und -octa-1,4-dien, cyclische Diene wie Cyclopentadien, Cyclohexadiene, Cyclooctadiene und Dicyclopentadien sowie Alkenylnorbornene wie 5-Ehtyliden-2-norbornen, 5-Butyliden-2-norbornen, 2-Methallyl-5-norbornen, 2-Isopropenyl-5-norbornen und Tricyclo-diene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Katuschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxygruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln (I) oder (II) oder (III) oder (IV) zum Monomerengemisch in den Kautschuk eingebaut

R¹C(COOR²)=C(COOR³)R⁴ (I)

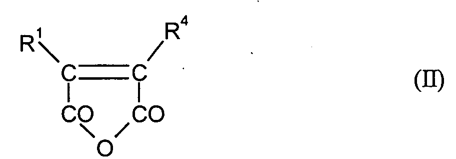

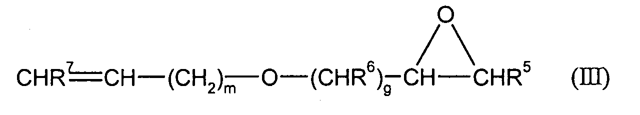

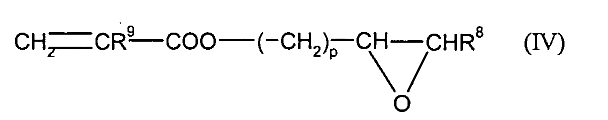

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln (I), (II) und (IV) sind Maleinsäure, Maleinsäureanhydrid und Epoxygruppen enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monmeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| | |
| 0,1 bis 40, | insbesondere 0,3 bis 20 Gew.-% Glycidylacrylat und/oder Glycidylmethacrylat, (Meth)acrylsäure und/oder Maleinsäureanhydrid, und |
| | |
| 1 bis 45, | insbesondere 10 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im Allgemeinen durch Polymerisation von Styrol, Acrylnitril, Methacrylnitril, α-Methylstyrol, p-Methylstyrol, Acrylsäureestern und Methacryl-säureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 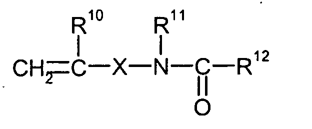 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder -OR¹³,
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆- bis C₁₂-Arylengruppe oder 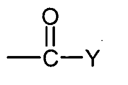
- Y: O-Z oder NH-Z und
- Z: eine C₁- bis C₁₀-Alkylen- oder C₆- bis C₁₂-Arylengruppe.

Auch die in der P-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehreren polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer, für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Diese Pfropfpolymerisate, insbesondere ABS- und/oder ASA-Polymere in Mengen bis zu 40 Gew.-%, werden vorzugsweise zur Schlagzähmodifizierung von PBT, gegebenenfalls in Mischung mit bis zu 40 Gew.-% Polyethylenterephthalat eingesetzt. Entsprechende Blend-Produkte sind unter dem Warenzeichen Ultradur®S (ehemals Ultrablend®S der BASF AG) erhältlich. ABS/ASA-Mischungen mit Polycarbonaten sind unter dem Warenzeichen Terblend® (BASF AG) im Handel erhältlich.

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copoylmeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Selbstverständlich können auch Mischungen der vorstehend aufgeführten Kautschuktypen eingesetzt werden.

Als Komponente E) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können z.B. Natriumphenylphosphinat, Aluminiumoxid, Siliziumdioxid sowie bevorzugt Talkum eingesetzt werden.

Gleit- und Entformungsmtitel, welche üblicherweise in Mengen bis zu 1 Gew.-% eingesetzt werden, sind bevorzugt langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäruen mit Kettenlängen von 28 bis 32 C-Atomen) sowie niedermolekulare Polyethylen- bzw. Polypropylenwachse.

Als Beispiele für Weichmacher seien Phthalsäuredioctylester, Phthalsäure-dibenzylester, Phthalsäurebutylbenzylester, Kohlenwasserstofföle, N-(n-Butyl)benzolsulfonamid genannt.

Beispiele hierfür sind Polytetrafluorethylen (PTFE), Tetrafluorethylen-hexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Wiley Interscience, 1972) beschrieben.

Die Herstellung der erfindungsgemäßen Massen erfolgt z.B. auf Einwellen- oder Zweiwellen-Extrudern bzw. -Knetern. Die Masse-Temperatur richtet sich nach den verwendeten Polyamiden und liegt zwischen 220°C und 350°C.

### Beispiele

Folgende Produkte wurden in den Beispielen verwendet:
PA6 , Durethan B29 der Bayer AG, relative Viskosität η_{rel.} = 3,0, 0,5 gew.-%ige Lösung in *m*-Kresol
Diepoxid, Rütapox 0162 der Fa. Bakelit AG
Glasfaser, Bayer AG, CS 7928
Modifikator, Exxelor VA1801 der Fa. EXXON
Hitzestabilisator (Kupferiodid/Kaliumhalogenid-Typ)
Montanesterwachs
Ruß

Die Einsatzstoffe wurden auf einem Zweischneckenextruder der Fa. Werner & Pfleiderer (150 U/min; 10 kg/h) bei 280°C compoundiert, in ein Wasserbad extrudiert und granuliert. Das erhaltene Granulat wurde jeweils bei ca. 70°C im Vakuumtrockenschrank 4 Stunden getrocknet.

Die Herstellung der zum Thermoförmen erforderlichen Plattenhalbzeuge erfolgte mit dem beispielgemäß hergestellten Granulaten auf einer Extrusionsanlage. Das Polymergranulat wurde dabei über einen Entgasungsextruder durch eine Breitschlitzdüse extrudiert und über ein Glättwerk abgezogen und kalibriert. Es wurden so Platten in 3 mm Dicke und 800 mm Breite hergestellt, die auf ca. 2000 mm Länge geschnitten wurden.

Die Plattenhalbzeuge wurden dann auf einer Thermoformanlage der Fa. Illig (Typ Illig UA 100g Thermoformanlage) thermogeformt. Als Thermoformwerkezeug (TW) wurde das auf 90°C temperierte Porsche-Werkzeug aus Aluminium der Fa. Illig verwendet, das es erlaubt, Bereiche mit hohen Verstreckgraden und Bereiche mit niedrigen Verstreckgraden nebeneinander abzubilden. Verglichen wurden die Oberflächenrauhigkeiten an Bereichen hoher und niedrigerer Verstreckung.

| | | Beispiel 1 | Beispiel 2 |
|---|---|---|---|
| PA6 | Gew.-% | 76,5 | 83,45 |
| Glasfaser | Gew.-% | 15,0 | 15,0 |
| Diepoxid | Gew.-% | 0,6 | 0,65 |
| Modifikator | Gew.-% | 7,0 | - |
| Wachs, Ruß, Stabilisator | Gew.-% | 0,9 | 0,9 |
| | | | |
| Kerbschlagzähigkeit ¹⁾ | kJ/m² | 15 | <10 |
| MVR ²⁾ | cm³/10 min | 3,0 | 3,0 |
| | | | |
| Oberflächenrauhigkeit (Ra) ³⁾, hohe | µm | 6,13 innen ⁴⁾ | 10,40 innen ⁴⁾ |
| Verstreckung | | 10,69 außen ⁵⁾ | 17,24 außen ⁵⁾ |
| Oberflächenrauhigkeit (Ra) ³⁾, | µm | 6,51 innen ⁴⁾ | 6,68 innen ⁴⁾ |
| niedrige | | 8,89 außen ⁵⁾ | 11,66 außen ⁵⁾ |
| Verstreckung | | | |
| Verarbeitungsverhalten bei | | Gut; glatte | Schlecht; |
| Besäumung (mit Bandsäge) | | Schnittkanten | brüchige, |
| | | | splittrige |
| | | | Schnittkanten |

| | | | |
|---|---|---|---|
| ¹⁾ nach ISO 180-1A, 23°C, im spritzfrischen Zustand | | | |
| ²⁾ nach ISO 1133, 270°C, 5 kg | | | |
| ³⁾ Mittelwert, gemessen mit Schichtdickenmessgerät Tencor Alphastep 500 | | | |
| ⁴⁾ innen = Oberfläche mit Werkzeugkontakt | | | |
| ⁵⁾ außen = Oberfläche ohne Werkzeugkontakt | | | |

## Patentansprüche

1. Polyamidcompounds enthaltend
A) 47 bis 79 Gew.-% eines thermoplastischen teilkristallinen Polyamids,
B) 0 bis 50 Gew.-% Verstärkungsstoffe,
C) 0,1 bis 4 Gew.-% eines verzweigend und/oder kettenverlängernd wirkenden Additivs,
D) 0,1 bis 30 Gew.-% eines kautschukelastischen Polymerisats.
E) 0,1 bis 2 Gew.-% Verarbeitungsadditive.

2. Formmassen gemäß Anspruch 1, **dadurch gekennzeichnet, dass** das thermoplastische, teilkristalline Polyamid A) Polyamid 6, Polyamid 66, Polyamid 46, Polyamid 610, Polyamid 6/6T oder teilkristallines Copolyamid auf Basis dieser Polyamide hergestellt oder eine Mischung aus den genannten Polyamide ist.

3. Formmassen gemäß einem oder mehreren der vorangegangenen Ansprüche, **dadurch gekennzeichnet, dass** als Verstärkungsstoff B) Glasfasern, Kohlefasern, Mineralfasern oder Mischungen und/oder teilchenförmige, mineralische Füllstoffe verwendet werden.

4. Formmassen gemäß einem oder mehreren der vorangegangenen Ansprüche, **dadurch gekennzeichnet, dass** als Diepoxid C) Diepoxide auf Basis Diglycidylether, oder auf Basis von Aminepoxidharzen, oder auf Basis Diglycidylester einzeln oder in Mischungen eingesetzt werden.

5. Formmassen gemäß einem oder mehreren der vorangegangenen Ansprüche, **dadurch gekennzeichnet, dass** als Diepoxid C) Diglycidylether auf Basis Bisphenol A und Epichlorhydrin, oder Aminepoxidharze auf Basis Anilin und Epichlorhydrin, oder Diglycidylester auf Basis cycloaliphatischer Dicarbonsäuren und Epichlorhydrin einzeln oder in Mischungen eingesetzt werden.

6. Formmassen gemäß einem oder mehreren der vorangegangenen Ansprüche, **dadurch gekennzeichnet, dass** als kautschukelastisches Polymerisat D) EPM, EPDM oder Copolymerisate aus EPD und EPDM eingesetzt werden.

7. Verwendung der Formmassen gemäß einem oder mehreren der vorangegangenen Ansprüche zur Herstellung von geformten Körpern nach dem Spritzgieß-, Gasinjektions-, Extrusions-, Extrusionsblas- oder Extrusionssaugblasverfahren.

8. Verwendung der Formmassen gemäß einem oder mehreren der vorangegangenen Ansprüche in einem Schweißverfahren von extrudierten oder gespritzten Teilen nach dem Heißelement-, Heißsiegel-, Vibrations-, Hochfrequenz- oder Laserdurchstrahlverfahren.

9. Formkörper und thermoplastische Halbzeuge hergestellt aus erfindungsgemäßen Formmassen.

10. Verwendung der Formmassen gemäß einem oder mehreren der vorangegangenen Ansprüche und daraus hergestellter Formkörper und thermoplastischer Halbzeuge zum Thermoformen.
